# EUROPÄISCHE PATENTSCHRIFT

(11) **EP 1 053 512 B1**
(45) Veröffentlichungstag und Bekanntmachung des Hinweises auf die Patenterteilung: **27.11.2002**
(21) Anmeldenummer: 99907302.6
(22) Anmeldetag: 01.02.1999
(51) Int. Cl.: G05B 11/32

(54) **VERFAHREN UND REGELEINRICHTUNG ZUR REGELUNG EINES GASTURBOSATZES, INSBESONDERE VON GAS- UND DAMPF-KRAFTWERKEN**
METHOD AND REGULATING DEVICE FOR REGULATING A GAS TURBO GENERATOR, ESPECIALLY IN GAS AND STEAM POWER PLANTS
PROCEDE ET DISPOSITIF POUR REGULER LE FONCTIONNEMENT D'UN GROUPE ELECTROGENE A TURBINE A GAZ, EN PARTICULIER DE CENTRALES ELECTRIQUES A GAZ ET A VAPEUR

(30) Priorität: 02.02.1998 DE 19804026
(43) Veröffentlichungstag der Anmeldung: 22.11.2000
(73) Patentinhaber: SIEMENS AKTIENGESELLSCHAFT, 80333 München (DE)
(72) Erfinder: KUTZNER, Rüdiger, D-91056 Erlangen (DE); SIMON, Dieter, D-45473 Mülheim (DE)
(86) Internationale Anmeldenummer: DE9900265
(87) Internationale Veröffentlichungsnummer: WO99039249

(56) Entgegenhaltungen:
- WO-A-93/24991
- DE-A- 2 447 632
- US-A- 4 259 837
- US-A- 5 487 265
- HU XIAO-PING: "THE PRESSURE, FLOW DECOUPLING CONTROL SYSTEM OF HYPOBARIC CHAMBER" PROCEEDINGS OF THE ANNUAL INTERNATIONAL CONFERENCE OF THE ENGINEERI IN MEDICINE AND BIOLOGY SOCIETY, ORLANDO, OCT. 31 - NOV. 3, 1991, Bd. 5, Nr. CONF. 13, 31. Oktober 1991, Seiten 2183-2184, XP000347747 NAGEL J;SMITH W M
- SMITH K J ET AL: "A COMPARISON OF MULTIVARIABLE CONTROL AND SEQUENCTIAL LOOP CLOSURE CONTROL IN A DYNAMIC STRUCTURAL TEST SYSTEM-DESIGN AND IMPLEMENTATION" PROCEEDINGS OF THE AMERICAN CONTROL CONFERENCE (ACC), SEATTLE, JUNE 21 - 23, 1995, Bd. 2, 21. Juni 1995, Seiten 1474-1478, XP000590511 INSTITUTE OF ELECTRICAL AND ELECTRONICS ENGINEERS
- VEGTE J VAN DE: "SEQUENTIAL DESIGN OF MULTIVARIABLE CONTROL SYSTEMS" IEE PROCEEDINGS D. CONTROL THEORY & APPLICATIONS, Bd. 138, Nr. 2, 1. März 1991, Seiten 103-110, XP000220428
- PATENT ABSTRACTS OF JAPAN vol. 009, no. 144 (P-365), 19. Juni 1985 & JP 60 022204 A (TOSHIBA KK), 4. Februar 1985
- PATENT ABSTRACTS OF JAPAN vol. 010, no. 247 (P-490), 26. August 1986 & JP 61 075401 A (TOSHIBA CORP), 17. April 1986

## Beschreibung

Die vorliegende Erfindung betrifft ein Verfahren zur Regelung eines Gasturbosatzes, insbesondere von Gas- und Dampf-Kraftwerken, wobei mehrere Stellglieder verwendet werden. Daneben betrifft die Erfindung auch eine nach diesem Verfahren arbeitende Regeleinrichtung.

Ein Gasturbosatz ist eine Gasturbine mit angetriebenem Generator und - falls erforderlich - einem Getriebe. Ausgehend von einem einfachen mechanischen Drehzahlregler für eine Turbine und einem elektromechanischen Spannungsregler für einen Generator wurden im Laufe der Zeit die in Kraftwerken, zum Beispiel in Gas- und Dampf-Turbinenanlagen, eingesetzten Regeleinrichtungen ständig verbessert und dem Entwicklungsstand der Technik angepaßt.

Bekannt ist ein Regelungsverfahren, bei dem die Menge des in die Turbine einströmenden Arbeitsmediums über ein Turbinenstellglied gesteuert wird, dessen Stellgröße in einem Regelkreis aus der Abweichung der Ist-Leistung des Generators von einer Soll-Leistung gebildet wird. Die Leistung und damit die Drehzahl des Generators läßt sich somit beispielsweise mit der Ventilstellung über die Brennstoffmenge regeln. In einem weiteren Regelkreis wird aus der Abweichung der Ist-Spannung des Generators von einer Soll-Spannung eine weitere Stellgröße gebildet, die einem den Erregerstrom oder die Erregerspannung des Generators steuernden Erregerstellglied zugeführt wird. Dazu kann beispielsweise ein Spannungsregler verwendet werden, der die Klemmenspannung des Generators über die Erregung des Generators einstellt. Das bekannte Regelungsverfahren geht somit von voneinander getrennten Regelkreisen aus.

Die Annahme von getrennten Regelkreisen mit entkoppelten Regelstrecken ist bei Dampfturbosätzen mit großen thermischen Speichern zulässig, sofern die Ventile nicht angedrosselt sind. Über die aus Turbine, Generator und einem vom Generator gespeisten Netz aufgebaute Regelstrecke beeinflussen sich die Regelkreise gegenseitig. Dies kann dazu führen, daß bei Ausgleichsvorgängen unter Beeinträchtigung des Gesamtregelverhaltens die Regelkreise gegeneinander arbeiten. Um diesen Einfluß auszugleichen, wird bei dem bekannten Verfahren eine aus der Generatorleistung abgeleitete Korrekturgröße als Teilstellgröße dem Erregerstellglied zugeführt. Damit werden Netzschwankungen oder Änderungen der Schlupffrequenz ausgeglichen und Leistungspendelungen gedämpft. Derartige Leistungspendelungen treten insbesondere bei Kraftwerksanlagen auf, die über lange Leitungen mit einem Verbundnetz gekoppelt sind. Eine Schaltungsanordnung zur Bedämpfung von Leistungspendelungen in Netzen ist beispielsweise aus der DE 28 51 871 C2 bekannt.

Bei Verwendung einer Dampfturbine reicht die vereinfachende Annahme einer dynamischen Entkopplung der Regelkreise zur Beschreibung des Gesamtsystems noch aus, sofern die Ventile nicht angedrosselt sind. Dagegen treten bei Verwendung einer Gasturbine aufgrund der gegenüber der Dampfturbine vergleichsweise geringen Verzögerungen bzw. Reaktionszeiten der Gasturbine unerwünschte Kopplungen auf, die zu einer Entdämpfung der getrennten Regelungen führen können. So reicht beispielsweise bei Gasturbinen die Bandbreite der Reaktionen auf Änderungen des Brennstoffdurchflusses in den Grenzbereich der Generatordynamik hinein, so daß die vereinfachende Annahme einer dynamischen Entkopplung nicht mehr zulässig ist. Derartige Kopplungsprobleme treten auch bei Anlagen mit mehreren Gasturbosätzen, insbesondere bei Gas- und Dampfturbinen-Anlagen, auf. Mit der erwähnten Schaltungsanordnung zur Bedämpfung von Leistungspendelungen entsprechend der DE-28 51 871 C2, die in einem sogenannten Pendeldämpfungsgerät realisiert ist, wird ein gewisser Einfluß des Regelkreises der Turbine auf den Regelkreis des Generators erreicht. Dennoch arbeiten die beiden Regelkreise getrennt voneinander.

Da jedes physikalische Stellglied, beispielsweise das Ventil oder der Erregersteller, einen begrenzten Stellbereich aufweist, können die einzelnen Stellglieder beispielsweise bei durch Störungen oder durch Schaltvorgänge im Netz ausgelösten Reaktionen der Regler in die Begrenzung geraten, was immer mit einer Verschlechterung des Regelverhaltens verbunden ist. Das mit der Begrenzung des Stellbereiches der Stellglieder gegebene Problem ist bei Mehrgrößenreglern noch gravierender, da sich über die Kopplungen in der Regelstrecke und dem Regler die Begrenzungen in einem Stellglied auch auf die anderen Stellgrößen auswirken.

Aus der EP 0 642 707 B1 ist ein Verfahren und eine Regeleinrichtung zur Regelung einer Turbinen-Generator-Anordnung bekannt, die sich auf die Zusammenlegung der Einzelregler für Drehzahl, Leistung und Spannung in einer Mehrgrößenregelung bezieht. Änderungen in den Regelstrecken werden bei dem Verfahren und der Regeleinrichtung gemäß der EP 0 642 707 B1 durch eine Adaptionsstrategie für die Reglerparameter berücksichtigt.

Besonders nachteilig wirkt sich dabei aus, daß Änderungen der Regelstrecke während des Betriebs eines Kraftwerkes nicht immer eindeutig erkannt werden und so Stabilitätsprobleme mit sich bringen können. Aus diesem Grund sehen beispielsweise die Richtlinien der Deutschen Verbundgesellschaft keine Umschaltung der Reglerparameter im laufenden Betrieb vor.

Darüber hinaus besteht aufgrund der fortschreitenden Entwicklung der Gasturbinen-Technologie teilweise ein Bedarf an zusätzlichen Reglern, beispielsweise Grenzwertreglern, die andere Regler ablösen, sobald eine Stellgröße in die Begrenzung gerät oder physikalische Grenzen beim Betrieb der Gasturbine überschritten werden. Mit diesen Reglern ist ein erhöhter Aufwand gegeben, der auch aufwendige Änderungen in der Reglerstruktur mit sich bringt, die wiederum eine geringere Regelgüte zur Folge haben können.

Der Erfindung liegt daher die Aufgabe zugrunde, ein Verfahren zur Regelung eines Gasturbosatzes, insbesondere von Gas- und Dampf-Kraftwerken, bereitzustellen, mit welchem die Verkopplungen in den Regelstrecken und darüber hinaus Stellgrößenbegrenzungen berücksichtigt und eine zuverlässige Regelung des Gasturbosatzes ermöglicht werden. Daneben soll eine zugehörige Regeleinrichtung bereitgestellt werden.

Zur technischen Lösung dieser Aufgaben wird ein Verfahren zur Regelung eines Gasturbosatzes, insbesondere von Gas- und Dampf-Kraftwerken, vorgeschlagen, das dadurch gekennzeichnet ist, daß wenigstens zwei Stellgliedern des Gasturbosatzes eine sich aus mehreren Teilstellgrößen zusammensetzende Stellgröße zugeführt wird, wobei die Teilstellgrößen für jede einzelne Stellgröße mittels individueller Übertragungsfunktionen aus Regelabweichungen gebildet werden.

In vorzugsweiser Ausbildung der Erfindung können sich die Stellgrößen sämtlicher Stellglieder des Gasturbosatzes aus der gleichen Anzahl von Teilstellgrößen zusammensetzen. Die Anzahl der Teilstellgrößen entspricht der Anzahl der Regelabweichungen, wobei jede einzelne Stellgröße mittels individueller Übertragungsfunktionen aus den Regelabweichungen gebildet wird. Somit ist eine Verkopplung in den Regelstrecken und gleichzeitig eine zuverlässige Regelung des Gasturbosatzes gegeben. Damit wird erfindungsgemäß eine die Kopplungen in der Regelstrecke durch entsprechende Übertragungsfunktionen berücksichtigende Mehrgrößenregelung bereitgestellt, die alle für die Regelung wesentlichen Streckencharakteristika erfaßt und so jeden Betriebszustand des Gasturbosatzes stabilisiert.

Gemäß vorteilhafter Ausbildung der Erfindung wird also wenigstens eine der Stellgrößen zusätzlich aus wenigstens einer der weiteren Stellgrößen zusammengesetzt. Gemäß einem weiteren vorteilhaften Weiterbildung der Erfindung wird wenigstens eine Teilstellgröße aus einer Stellgröße gebildet. Dadurch werden zur Regelung auch die tatsächlichen, unter Umständen begrenzten Stellgrößen verwendet. Dabei kann die tatsächliche Stellgröße gemessen werden oder die Begrenzung wird im Regler nachgebildet, so daß es keiner Messung bedarf. Den Teilstellgrößen steht so vorteilhafterweise die Information einer Stellgrößenbegrenzung zur Verfügung. Mit dem erfindungsgemäßen Verfahren lassen sich so die bisher in der Regel verwendeten Grenzwertregler einsparen.

Zur Verbesserung der Regelung hinsichtlich der Dynamik des Gesamtsystems werden als Regelabweichungen die Differenz aus Sollwert und Istwert der Generatorleistung, der Generatorspannung, der Turbinentemperatur und der Turbinendrehzahl bzw. bei Kopplung des Gasturbosatzes mit einem Verbundnetz der Generatorfrequenz verwendet. Dazu werden die jeweiligen Istwerte, das heißt die abgegebene Generatorleistung, die Generatorspannung, die Turbinentemperatur, die Turbinendrehzahl und/oder bei einer Kopplung des Gasturbosatzes mit einem Verbundnetz die Generatorfrequenz gemessen und die Abweichung von den geforderten Sollwerten derselben gebildet.

Gemäß einem weiteren vorteilhaften Vorschlag der Erfindung werden für den Gasturbosatz wenigstens ein Stellglied zum Einstellen des Stroms eines in die Turbine einströmenden Arbeitsmediums, wenigstens ein Stellglied zum Erzeugen eines Erregerstroms oder einer Erregerspannung für die Feldwicklung des Generators und wenigstens ein Stellglied zum Einstellen der Leitschaufeln eines Verdichters verwendet.

Die Aufgabe, eine nach dem erfindungsgemäßen Verfahren arbeitende Regeleinrichtung zur Regelung eines Gasturbosatzes, insbesondere von Gas- und Dampf-Kraftwerken, bereitzustellen, wird gelöst durch eine Regeleinrichtung, der als Eingangsgrößen Ist- und Sollwerte des Gasturbosatzes zugeführt sind und die an die Stellglieder des Gasturbosatzes jeweils aus mehreren Teilstellgrößen gebildete Stellgrößen abgibt, wobei die Regeleinrichtung Mittel zum Bilden von Regelabweichungen aus den Soll- und Istwerten, Mittel zum Erzeugen von Teilstellgrößen aus den Regelabweichungen und Mittel zum Verknüpfen von mehreren Teilstellgrößen zum Bilden einer Stellgröße aufweist.

Gemäß einer vorteilhaften Ausgestaltung der erfindungsgemäßen Regeleinrichtung sind die Mittel zum Erzeugen der Teilstellgrößen aus den Regelabweichungen ein Regelalgorithmus, der beispielsweise in einem Nur-Lese-Speicher (ROM) oder in anderer geeigneter Form abgelegt sein kann. Es sind so für jede einzelne Stellgröße individuelle Übertragungsfunktionen bildbar, die in Abhängigkeit von den Regelabweichungen die Teilstellgrößen generieren. Auf diese Art und Weise ist es möglich, bereits während der Auslegung der Regeleinrichtung im voraus sämtliche Charakteristika der zu regelnden Regelstrecke zu berücksichtigen. Danit ist eine Regeleinrichtung geschaffen, die auch ohne programmtechnische Adaptionsstrategien zur Einstellung von Reglerparametern sämtliche beim Entwurf zugrunde gelegten Regelstrecken beherrschen kann.

Weitere Einzelheiten und Vorteile der Erfindung werden nachfolgend anhand der Beschreibung der in den Figuren dargestellten Ausführungsbeispiele näher erläutert. Es zeigen:
- Fig. 1: ein erstes Beispiel für die erfindungsgemäße Regelung in einer Zustandsdarstellung,
- Fig. 2: ein weiteres Ausführungsbeispiel der erfindungsgemäßen Regelung in einer Zustandsdarstellung,
- Fig. 3: in einem Blockschaltbild ein Ausführungsbeispiel für eine erfindungsgemaße Regeleinrichtung und
- Fig. 4: eine Abwandlung von Figur 3 mit zwei verkoppelten Stellgliedern.

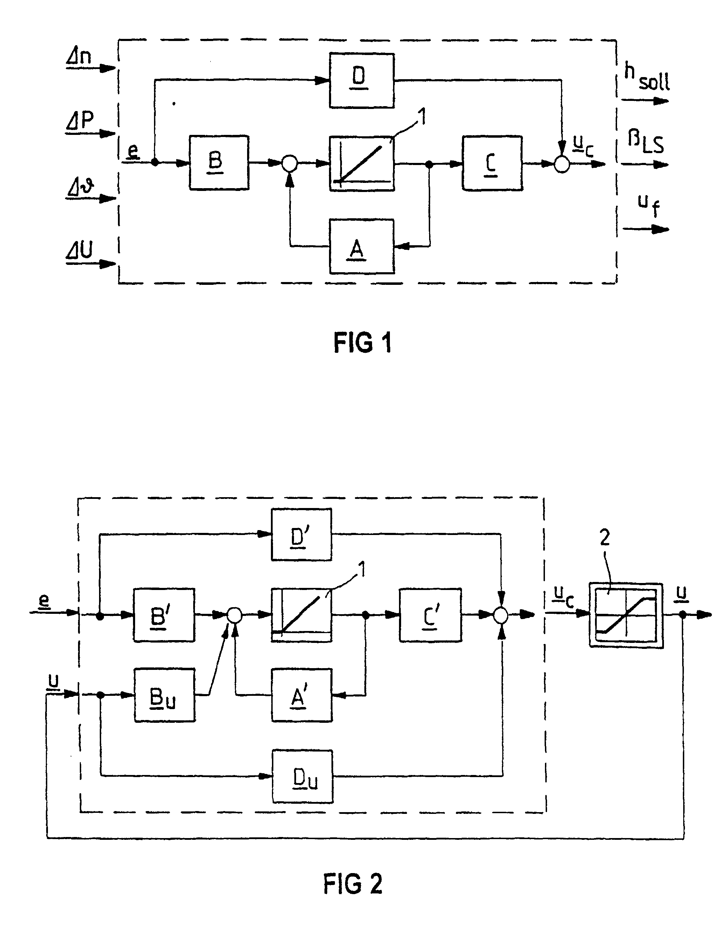

Fig. 1 zeigt ein Ausführungsbeispiel der erfindungsgemäßen Regelung in einer Zustandsdarstellung. Zur Regelung eines hier nicht dargestellten Gasturbosatzes werden Regelabweichungen, hier der Turbinendrehzahl Δn, der Generatorleistung ΔP, der Turbinentemperatur Δϑ und der Generatorspannung ΔU, zusammengefaßt durch den Vektor e als Eingangsgrößen der Regelung zugeführt. Als Ausgangsgrößen liefert die Regelung die hier zu einem Vektor u_{c} zusammengefaßten Stellgrößen für den Gasturbosatz, hier zum Einstellen des Stroms eines in die Turbine des Gasturbosatzes einströmenden Arbeitsmediums über ein Ventil oder eine Anzahl von Ventilen hₛₒₗₗ, zum Einstellen der Leitschaufeln eines Verdichters des Gasturbosatzes β_{LS} und zum Erzeugen eines Erregerstromes oder einer Erregerspannung für die Feldwicklung des Generators des Gasturbosatzes u_{f}. Die Stellgrößen u_{c} werden aus wenigstens vier Teilstellgrößen zusammengesetzt, die mittels individueller Übertragungsfunktionen, welche hier durch die vier Matrizen A, B, C und D dargestellt sind, aus den Regelabweichungen e gebildet. Im vorliegenden Fall werden durch die vier Matrizen A, B, C und D zwölf Einzelübertragungsfunktionen dargestellt, die die vier Regelabweichungen des Vektors e auf die drei Stellgrößen des Vektors u_{c} abbilden. Wie anhand von Fig. 1 zu erkennen, werden zur Regelung aus dem Vektor der Regelabweichungen e mittels verschiedener Matrizen gewonnene Teilgrößen einem Regelglied 1 zugeführt. Über die verschiedenen Matrizen A, B, C und D lassen sich sämtliche Regelstrecken vorab definieren. Sowohl für eine hardwaremäßige als auch softwaremäßige Realisierung der Regelung ist die wie in Fig. 1 gezeigte allgemeine vektorielle Darstellung der Zustandsform überaus günstig. So lassen sich durch die einzelnen Koeffizienten der Matrizen A, B, C und D sämtliche Streckencharakteristika oder über entsprechende Funktionen in den einzelnen Koeffizientenstellen der Matrizen entsprechende Streckenmodelle bereits beim Entwurf berücksichtigen. Eine kosteneinsparende Integration sämtlicher Regelfunktionen in einem Gerät ist so überaus einfach realisierbar. Das Regelglied 1 ist dabei vorteilhafterweise durch einen Regelalgorithmus realisiert und kann so überaus einfach modifiziert werden.

Bei der in Fig. 2 ebenfalls in Zustandsform dargestellten Regelung werden in Ergänzung zu den in Fig. 1 dargestellten Regelungen auch die tatsächlichen, als Vektor u zusammengefaßten, unter Umständen begrenzten Stellgrößen als Eingangsgrößen neben dem zum Vektor e zusammengefaßten Regelabweichungen als Eingangsgrößen zugeführt. Dabei ist es unerheblich, ob die tatsächliche Stellgröße gemessen oder ob die Begrenzung in der Reglerrealisierung nachgebildet wird. Damit steht sämtlichen Teilregelfunktionen auch die Information einer Stellgrößenbegrenzung zur Verfügung. Im Vergleich zu Fig. 1 ist die Regelung entsprechend Fig. 2 um zwei weitere Matrizen, einer Eingangsmatrix Bu und einer Durchgriffmatrix Du für die tatsächlichen Stellgrößen ergänzt. Die individuelle Übertragungsfunktionen aus den Eingangsgrößen bildenden sechs Matrizen sind hinsichtlich ihrer Koeffizienten bzw. Funktionen so zu bestimmen, daß im nicht begrenzten Fall, das heißt wenn keine der Stellgrößen des Gasturbosatzes hinsichtlich ihres Stellbereiches in einer Beschränkung ist, die Funktion der in Fig. 1 dargestellten Regelung aufrecht erhalten wird.

Mit der in Fig. 2 dargestellten Regelung ist ein Zustandsregler gegeben, der einen das Verhalten der Regelstrecke abschätzenden Beobachter aufweist und eine Zustandsrückführung enthält. Für eine derartige Regelung sind Überlaufbegrenzungsverfahren, sogenannte Anti-Wind-Up-Verfahren, geeignet, die beispielsweise den Regelalgorithmus des Regelgliedes 1 so modifizieren, daß Beobachtungsfehler trotz einer hier durch das Begrenzungsglied 2 dargestellten Stellgrößenbegrenzung vermieden werden. Auf diese Art und Weise können Grenzwertregler eingespart werden. So kann beispielsweise ein Abgastemperaturregler bei Ausnutzung des Stellbereiches von Verdichtervorleitschaufeln einen Leistungsregler ablösen, während beispielsweise der Leitschaufelregler in seiner Begrenzung bleibt. Auf diese Art und Weise läßt sich eine bessere Ausnutzung des Betriebsbereiches der Gasturbine eines Gasturbosatzes erzielen.

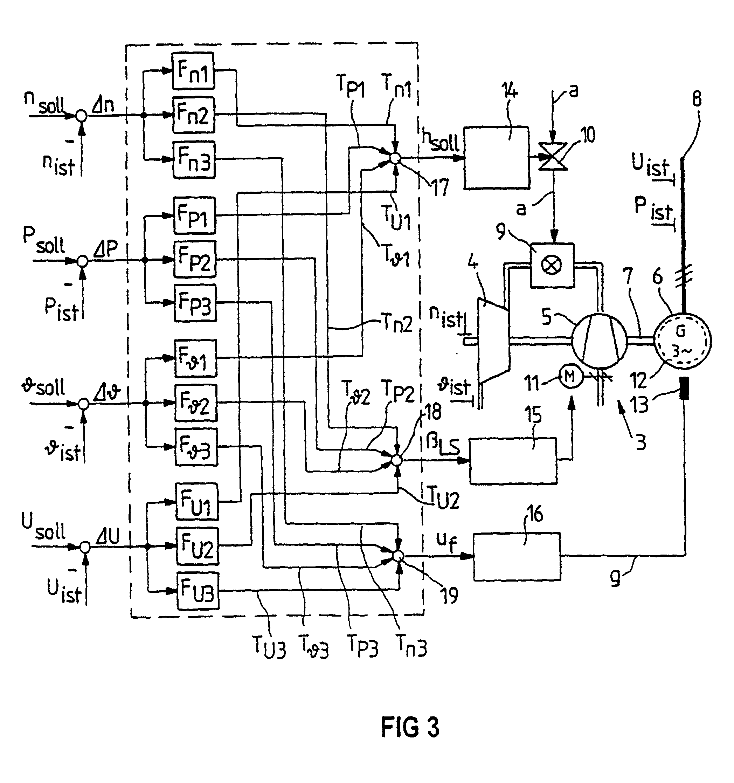

Fig. 3 zeigt ein Blockschaltbild einer erfindungsgemäßen Reglereinrichtung für einen eine Turbine 4, einen Verdichter 5 und einen Generator 6 umfassenden Gasturbosatz 3. Die Turbine 4 treibt über eine Welle 7 den Generator 6 an. Dabei wird mit dem Verdichter 5 Luft aus der Atmosphäre angesaugt und der mit 9 gekennzeichneten Brennkammer zugeführt. Dort reagiert das unter Druck einströmende Arbeitsmedium a mit dem in der Luft enthaltenen Sauerstoff. Dieses Gasgemisch expandiert dann unter Arbeitsabgabe in der Gasturbine 4. Der Generator 6 speist, sofern er an das mit 8 gekennzeichnete Versorgungsnetz, beispielsweise über einen hier nicht dargestellten geschlossen Blockschalter und einen hier ebenfalls nicht dargestellten Blocktransformator, angeschlossen ist, in dieses ein.

Zum Einstellen des Stroms des in die Gasturbine 4 einströmenden Arbeitsmediums a ist ein Stellglied in Form eines Ventils 10 oder einer Anzahl von Ventilen vorgesehen.

Zum Einstellen der Leitschaufeln des Verdichters 5 ist hier als Stellglied ein Motor 11 oder eine Anzahl von Motoren vorgesehen, die die Winkelstellung der Leitschaufeln des Verdichters 5 verändern.

Der rotierende Erregerteil 12 des Generators 6 wird von einer im Stator angeordneten Feldwicklung 13 erregt. Ein hier nicht dargestellter Hilfserreger speist über ein Erregerstellglied, beispielsweise in Form eines Thyristorsatzes, die Feldwicklung 13. Dabei bildet das Erregerstellglied den für die Erregung erforderlichen variablen Gleichstrom oder Erregerstrom g. Der Generator wird dabei von der Feldwicklung im Rotor erregt, die über Schleifringe direkt von einem Thyristorsatz mit Strom versorgt werden. Alternativ kann der Thyristorsatz zunächst eine mitrotierende Haupterregermaschine sein, die über Gleichrichter die Feldwicklung des Generators mit Strom versorgt.

Der Regeleinrichtung werden die jeweils aus vorgegebenen Soll- und gemessenen Ist-Werten durch Differenzbildung gebildeten Regelabweichungen der Turbinendrehzahl Δn, der Generatorleistung ΔP, der Turbinentemperatur Δϑ und der Generatorspannung ΔU zugeführt. Zusätzlich oder alternativ zu der Turbinendrehzahl n kann auch die Generatorfrequenz f verwendet werden. Ebenso können weitere Größen als Eingangsgrößen verwendet werden, beispielsweise weitere Regelabweichungen, Stellgrößen, Begrenzungsstellgrößen, Befehle aus einer Kraftwerksleitwarte und dergleichen.

Aus den Regelabweichungen Δn, ΔP, Δϑ und ΔU werden mittels individueller Übertragungsfunktionen Fₙ₁, Fₙ₂, Fₙ₃, F_{P1}, F_{P2}, F_{P3}, F_{ϑ1}, F_{ϑ2}, F_{ϑ3}, F_{U1}, F_{U2} und F_{U3} Teilstellgrößen Tₙ₁, Tₙ₂, Tₙ₃, T_{P1}, T_{P2}, T_{P3}, T_{ϑ1}, T_{ϑ2}, T_{ϑ3}, T_{U1}, T_{U2} und T_{U3} gebildet. Anschließend wird mittels der Verknüpfungsglieder 17, 18, 19 aus jeweils vier Teilstellgrößen eine Stellgröße hₛₒₗₗ, βₗₛ, u_{f} für die Stellglieder 10, 11 und 13 des Gasturbosatzes 3 gebildet. Die Stellgrößen hₛₒₗₗ, β₁ₛ, u_{f} werden einem Ventilstellregler 14 für das Ventil 10, einem Stellungsregler 15 für den Motor 11 zur Leitschaufeleinstellung des Verdichters 5 sowie einem Erregungsregler 16, beispielsweise einem Thyristorsteller, zur Erzeugung eines Erregerstroms für die Feldwicklung 13 des Generators 6 zugeführt. Aufgrund der Komplexität der Regeleinrichtung, insbesondere aufgrund der zwölf individuellen Übertragungsfunktionen Fₖᵢ, empfiehlt es sich, zur Regelung rechnergestützte Algorithmen anzuwenden. Dabei berücksichtigt der Regelalgorithmus auch den Fall, daß eine Regelgröße einen Begrenzungswert erreicht, oder daß zum Beispiel während eines Anfahrvorganges einer Kraftwerksanlage nur der das Ventil 10 steuernde Regler 14 aktiv ist. Eine Umschaltung auf eine kombinierte Regelung, die bei einer Speisung des Erregerteils 12 über die Feldwicklung 13 und damit beim Aufbau der Generatorspannung U einsetzt, ist durch die Übertragungsfunktionen vollständig berücksichtigt und damit jederzeit möglich. Durch die individuellen Übertragungsfunktionen Fₖₗ ist eine Kommunikation zwischen den Stellgliedern des Gasturbosatzes, also zwischen dem Ventil 10, dem Motor 11 und der Feldwicklung 13 gegeben.

Da über die Übertragungsfunktionen Fₖᵢ alle wesentlichen Regelstreckencharakteristika über entsprechende Streckenmodelle berücksichtigt sind, ist die Regeleinrichtung hinsichtlich Änderungen in der Regelstrecke unempfindlich und überaus robust. Während des Betriebs beispielsweise durch Verschleiß oder Verschmutzung von Bauteilen, Arbeitspunktverschiebungen und Netzumschaltungen gegebene Änderungen in der Regelstrecke sind so bereits beim Entwurf des Reglers berücksichtigbar, so daß sich alle möglichen Betriebsfälle durch die Regeleinrichtung bereits im voraus stabilisieren lassen. So ist die Regeleinrichtung bereits im Vorfeld so dimensionierbar, daß beispielsweise vorgegebene Regelgüten problemlos eingehalten bzw. erzielt werden.

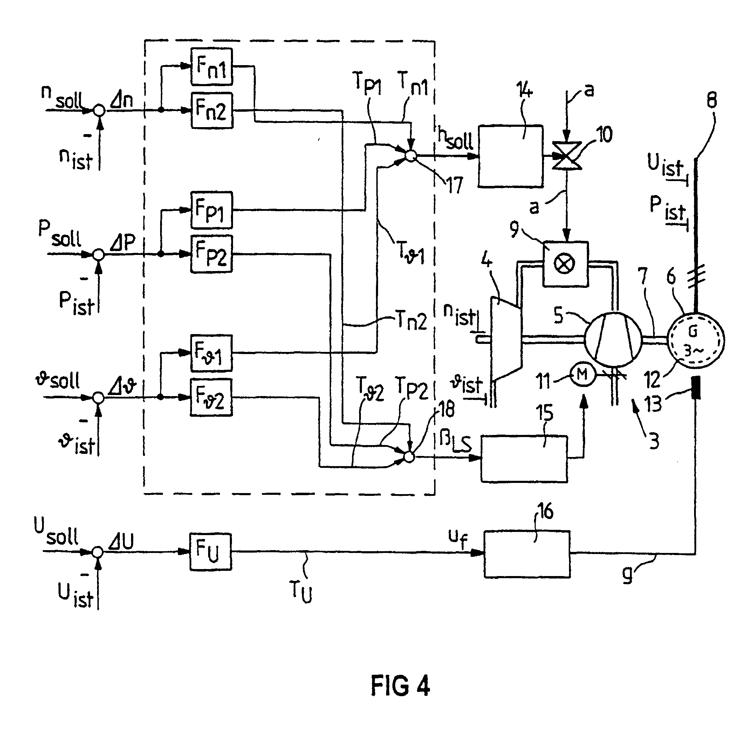

In Figur 4 ist das Ausführungsbeispiel gemäß Figur 3 insoweit abgewandelt, als daß nur die beiden Stellglieder 14 und 15 bezüglich ihrer Stellgrößen miteinander verkoppelt sind. Hier werden aus den Regelabweichungen Δn, ΔP und Δϑ jeweils durch Übertragungsfunktionen Fₖᵢ die Teilstellgrößen T_{K1} mit k = n, P, ϑ und i = 1 bzw. 2 gebildet und diese durch geeignete Mittel entsprechend Figur3 zu den Stellgößen hₛₒₗₗ und β_{LS} überlagert. Die Regelabweichung ΔU für die Spannungsregelung wird in diesem Fall mit der Übertragungsfunktion F_{U} direkt als Stellgröße u_{f} auf das Stellglied 16 für die Generatorspannung gegeben.

Für den Fall, daß entsprechend Figur 3 jedem Stellglied der Regeleinrichtung Teilstellgrößen zugeführt werden, ergibt sich die Anzahl der Teilstellgrößen vorteilhafterweise aus der Anzahl der an den Eingängen vorhandenen Regelabweichungen. Beispielsweise ergeben sich bei vier Regelabweichungen Δn, ΔP, Δϑ und ΔU in Figur 3 für jedes der drei Stellglieder 14, 15 und 16 je vier Teilstellgrößen. Damit gilt allgemein für die Teilstellgrößen Tₖ₁ mit k = 'Art der Regelabweichungen' und i = 'Bezifferung' des einzelnen Stellgliedes.

## Patentansprüche

1. Verfahren zur Regelung eines Gasturbosatzes, insbesondere von Gas- und Dampf-Kraftwerken, wobei mehrere Stellglieder verwendet werden, **dadurch gekennzeichnet, daß** wenigstens zwei Stellgliedern (14, 15, 16) des Gasturbosatzes (3) eine sich aus mehreren Teilstellgrößen (Tₖᵢ) zusammensetzende Stellgröße (hₛₒₗₗ, β_{LS}, u_{f}) zugeführt wird, wobei die Teilstellgrößen (Tₖ₁) für die einzelnen Stellgrößen (hₛₒₗₗ, β_{LS}, u_{f}) mittels individueller Übertragungsfunktionen (Fₖᵢ) aus Regelabweichungen (Δn, ΔP, Δϑ, ΔU) gebildet werden.

2. Verfahren nach Anspruch 1, **dadurch gekennzeichnet, daß** jedem einzelnen Stellglied (14, 15, 16) des Gasturbosatzes (3) eine sich aus der gleichen Anzahl von Teilstellgrößen (Tₖ₁) zusammensetzende Stellgröße (hₛₒₗₗ, β_{LS}, u_{f}) zugeführt wird

3. Verfahren nach Anspruch 2, **dadurch gekennzeichnet, daß** die Anzahl der Teilstellgrößen (Tₖᵢ) entsprechend der Anzahl der Regelabweichungen (Δn, ΔP, Δϑ, ΔU) gewählt wird.

4. Verfahren nach Anspruch 1, **dadurch gekennzeichnet, daß** wenigstens eine Teilstellgröße (Tₖᵢ) aus einer Stellgröße (hₛₒₗₗ, β_{LS}, u_{f}) gebildet wird.

5. Verfahren nach Anspruch 4, **dadurch gekennzeichnet, daß** die wenigstens eine Teilstellgröße (Tₖᵢ) mittels wenigstens einer Übertragungsfunktion (Fₖ₁) aus einer Stellgröße (hₛₒₗₗ, β_{LS}, u_{f}) gebildet wird.

6. Verfahren nach einem oder mehreren der Ansprüche 1 bis 5, **dadurch gekennzeichnet, daß** wenigstens eine der Stellgrößen (hₛₒₗₗ, β_{LS}, u_{f}) zusätzlich aus wenigstens einer der weiteren Stellgrößen (β_{LS}, u_{f} , hₛₒₗₗ) zusammengesetzt wird.

7. Verfahren nach einem oder mehreren der Ansprüche 1 bis 6, **dadurch gekennzeichnet, daß** als Regelabweichung die Differenz (ΔP) aus Sollwert (Pₛₒₗₗ) und Istwert (Pᵢₛₜ) der Generatorleistung (P) verwendet wird.

8. Verfahren nach einem oder mehreren der Ansprüche 1 bis 7, **dadurch gekennzeichnet, daß** als Regelabweichung die Differenz (ΔU) aus Sollwert (Uₛₒₗₗ) und Istwert (Uᵢₛₜ) der Generatorspannung (U) verwendet wird.

9. Verfahren nach einem oder mehreren der Ansprüche 1 bis 8, **dadurch gekennzeichnet, daß** als Regelabweichung die Differenz (Δn) aus Sollwert (nₛₒₗₗ) und Istwert (nᵢₛₜ) der Generatorfrequenz und/oder der Turbinendrehzahl (n) verwendet wird.

10. Verfahren nach einem oder mehreren der Ansprüche 1 bis 9, **dadurch gekennzeichnet, daß** als Regelabweichung die Differenz (Δϑ) aus Sollwert (ϑₛₒₗₗ) und Istwert (ϑᵢₛₜ) der Turbinentemperatur (ϑ) verwendet wird.

11. Verfahren nach einem oder mehreren der Ansprüche 1 bis 10, **dadurch gekennzeichnet, daß** für den Gasturbosatz (3) wenigstens ein Stellglied (14) zum Einstellen des Stroms eines in die Brennkammer (9) der Turbine (4) des Gasturbosatzes (3) einströmenden Arbeitsmediums (a) verwendet wird.

12. Verfahren nach einem oder mehreren der Ansprüche 1 bis 11, **dadurch gekennzeichnet, daß** für den Gasturbosatz (3) wenigstens ein Stellglied (16) zum Erzeugen eines Erregerstromes (g) für die Feldwicklung (13) des Generators (6) des Gasturbosatzes (3) verwendet wird.

13. Verfahren nach einem oder mehreren der Ansprüche 1 bis 12, **dadurch gekennzeichnet, daß** für den Gasturbosatz (3) wenigstens ein Stellglied (15) zum Einstellen der Leitschaufeln des Verdichters (5) des Gasturbosatzes (3) verwendet wird.

14. Verfahren nach einem oder mehreren der vorhergehenden Ansprüche, **dadurch gekennzeichnet, daß** für die Übertragungsfunktionen (Fₖᵢ) rechnergestützte Algorithmen verwendet werden.

15. Verfahren nach einem oder mehreren der vorhergehenden Ansprüche, **dadurch gekennzeichnet, daß** die Algorithmen eine Überlaufbegrenzung verwenden.

16. Verfahren nach einem oder mehreren der vorhergehenden Ansprüche, **dadurch gekennzeichnet, daß** als Überlaufbegrenzung ein Anti-Wind-Up-Regelalgorithmus verwendet wird.

17. Regeleinrichtung zur Durchführung des Verfahrens nach einem oder mehreren der Ansprüche 1 bis 16, **dadurch gekennzeichnet, daß** die Regeleinrichtung, mit Regelabweichungen (Δn, ΔP, Δϑ, ΔU) verbundene Mittel zur Abbildung von Übertragungsfunktionen (F_{N1}, F_{N2}, F_{N3}, F_{P1}, F_{P2}, F_{P3}, F_{ϑ1}, F_{ϑ2}, F_{ϑ3}, F_{U1}, F_{U2}, F_{U3},) aufweist, wobei die mit jeweils der gleichen Regelabweichung (Δn, ΔP, Δϑ, ΔU) verbundenen Mittel zur Abbildung von Übertragungsfunktionen (F_{N1}, F_{N2}, F_{N3}, F_{P1}, F_{P2}, F_{P3}, F_{ϑ1}, F_{ϑ2}, F_{ϑ3}, F_{U1}, F_{U2}, F_{U3},) mit jeweils verschiedenen, eine Stellgröße (hₛₒₗₗ, β_{LS}, U_{f}) erzeugenden Verknüpfungsstellen (17, 18, 19) verbunden sind.

18. Regeleinrichtung nach Anspruch 17, gekennzeichnet durch Mittel zur Bestimmung von Regelabweichungen aus Soll- und Istwerten.

## Claims

1. Method of controlling a gas turbine set, in particular in gas and steam power stations, a plurality of servo elements being employed, **characterized in that** a regulating variable (h_{required}, β_{LS}, u_{f}) composed of a plurality of partial regulating variables (Tₖᵢ) is supplied to at least two servo elements (14, 15, 16) of the gas turbine set (3), the partial regulating variables (Tₖᵢ) for the individual regulating variables (h_{required}, β_{LS}, u_{f}) being formed from control deviations (Δn, ΔP, Δθ, ΔU) by means of individual transfer functions (Fₖᵢ).

2. Method according to Claim 1, **characterized in that** a regulating variable (h_{required}, β_{LS}, u_{f}) composed of the same number of partial regulating variables (Tₖᵢ) is supplied to each servo element (14, 15, 16) of the gas turbine set (3).

3. Method according to Claim 2, **characterized in that** the number of partial regulating variables (Tₖᵢ) is selected to correspond with the number of control deviations (Δn, ΔP, Δθ, ΔU).

4. Method according to Claim 1, **characterized in that** at least one partial regulating variable (Tₖᵢ) is formed from a regulating parameter (h_{required}, β_{LS}, u_{f}).

5. Method according to Claim 4, **characterized in that** the at least one partial regulating variable (Tₖᵢ) is formed from a regulating variable (h_{required}, β_{LS}, u_{f}) by means of at least one transfer function (Fₖᵢ).

6. Method according to one or more of Claims 1 to 5, **characterized in that** at least one of the regulating variables (h_{required}, β_{LS}, u_{f}) is additionally composed of at least one of the further regulating variables (β_{LS}, u_{f}, h_{required}).

7. Method according to one or more of Claims 1 to 6, **characterized in that** the difference (ΔP) between the required value (P_{required}) and actual value (P_{actual}) of the generator output (P) is used as the control deviation.

8. Method according to one or more of Claims 1 to 7, **characterized in that** the difference (ΔU) between the required value (U_{required}) and the actual value (U_{actual}) of the generator voltage (U) is used as the control deviation.

9. Method according to one or more of Claims 1 to 8, **characterized in that** the difference (Δn) between the required value (n_{required}) and the actual value (n_{actual}) of the generator frequency and/or of the turbine rotational speed (n) is used as the control deviation.

10. Method according to one or more of Claims 1 to 9, **characterized in that** the difference (Δθ) between the required value (θ_{required}) and the actual value (θ _{actual}) of the turbine temperature (θ) is used as the control deviation.

11. Method according to one or more of Claims 1 to 10, **characterized in that** for the gas turbine set (3), at least one servo element (14) is used to adjust the flow of a working medium (a) flowing into the combustion chamber (9) of the turbine (4) of the gas turbine set (3).

12. Method according to one or more of Claims 1 to 11, **characterized in that** for the gas turbine set (3), at least one servo element (16) is used to generate an exciter current (g) for the field winding (13) of the generator (6) of the gas turbine set (3).

13. Method according to one or more of Claims 1 to 12, **characterized in that** for the gas turbine set (3), at least one servo element (15) is used for adjusting the guide vanes of the compressor (5) of the gas turbine set (3).

14. Method according to one or more of the preceding claims, **characterized in that** computer-supported algorithms are used for the transfer functions (Fₖᵢ).

15. Method according to one or more of the preceding claims, **characterized in that** the algorithms use an overshoot limitation.

16. Method according to one or more of the preceding claims, **characterized in that** an anti-wind-up control algorithm is used as the overshoot limitation.

17. Control device for carrying out the method according to one or more of Claims 1 to 16, **characterized in that** the control device has means, which are linked to control deviations (Δn, ΔP, Δθ, ΔU), for mapping transfer functions (F_{N1}, F_{N2}, F_{N3}, F_{P1}, F_{P2}, F_{P3}, F_{θ1}, F_{θ2}, F_{θ3}, F_{U1}, F_{U2}, F_{U3},), the means for mapping transfer functions (F_{N1}, F_{N2}, F_{N3}, F_{P1}, F_{P2}, F_{P3}, F_{θ1}, F_{θ2}, F_{θ3}, F_{U1}, F_{U2}, F_{U3},) which are in each case linked to the same control deviation (Δn, ΔP, Δθ, ΔU) each being connected to different linking locations (17, 18, 19) which generate a regulating variable (h_{required}, β_{LS}, u_{f}).

18. Control device according to Claim 17, **characterized by** means for determining control deviations from required values and actual values.

## Revendications

1. Procédé de régulation d'un groupe-générateur à turbine à gaz, notamment de centrales électriques à gaz et à vapeur, dans lequel on met en oeuvre plusieurs organes de réglage, **caractérisé en ce que** l'on fournit à au moins deux organes de réglage (14, 15, 16) du groupe-générateur (3) à turbine à gaz, une grandeur de réglage (h_{cons}, β_{LS}, u_{f}) composée de plusieurs grandeurs de réglage partielles (Tₖᵢ), les grandeurs de réglage partielles (Tₖᵢ) pour les grandeurs de réglage (h_{cons}, β_{LS}, u_{f}) individuelles étant formées à partir d'écarts de régulation (Δn, ΔP, Δϑ, ΔU) au moyen de fonctions de transmission (Fₖᵢ) individuelles.

2. Procédé selon la revendication 1, **caractérisé en ce que** l'on fournit à chaque organe de réglage (14, 15, 16) individuel du groupe-générateur (3) à turbine à gaz, une grandeur de réglage (h_{cons}, β_{LS}, u_{f}) composée du même nombre de grandeurs de réglage partielles (Tₖᵢ).

3. Procédé selon la revendication 2, **caractérisé en ce que** le nombre des grandeurs de réglage partielles (Tₖᵢ) est choisi de manière à correspondre au nombre des écarts de régulation (Δn, ΔP, Δϑ, ΔU).

4. Procédé selon la revendication 1, **caractérisé en ce qu'**au moins une grandeur de réglage partielle (Tₖᵢ) est formée à partir d'une grandeur de réglage (h_{cons}, β_{LS}, u_{f}).

5. Procédé selon la revendication 4, **caractérisé en ce que** ladite au moins une grandeur de réglage partielle (Tₖᵢ) est formée à partir d'une grandeur de réglage (h_{cons}, β_{LS}, u_{f}) au moyen d'au moins une fonction de transmission (Fₖᵢ).

6. Procédé selon l'une ou plusieurs des revendications 1 à 5, **caractérisé en ce que** l'une au moins des grandeurs de réglage (h_{cons}, β_{LS}, u_{f}) est formée en supplément à partir d'au moins l'une des autres grandeurs de réglage (β_{LS}, u_{f}, h_{cons}).

7. Procédé selon l'une ou plusieurs des revendications 1 à 6, **caractérisé en ce qu'**en guise d'écart de régulation, on utilise la différence (ΔP) entre la valeur de consigne (P_{cons}) et la valeur réelle (P_{réelle}) de la puissance (P) du générateur.

8. Procédé selon l'une ou plusieurs des revendications 1 à 7, **caractérisé en ce qu'**en guise d'écart de régulation, on utilise la différence (ΔU) entre la valeur de consigne (U_{cons}) et la valeur réelle (U_{réelle}) de la tension (U) du générateur.

9. Procédé selon l'une ou plusieurs des revendications 1 à 8, **caractérisé en ce qu'**en guise d'écart de régulation, on utilise la différence (Δn) entre la valeur de consigne (n_{cons}) et la valeur réelle (n_{réelle}) de la fréquence du générateur et/ou de la vitesse de rotation (n) de la turbine.

10. Procédé selon l'une ou plusieurs des revendications 1 à 9, **caractérisé en ce qu'**en guise d'écart de régulation, on utilise la différence (Δϑ) entre la valeur de consigne (ϑ_{cons}) et la valeur réelle (ϑ_{réelle}) de la température (ϑ) de la turbine.

11. Procédé selon l'une ou plusieurs des revendications 1 à 10, **caractérisé en ce que** l'on utilise pour le groupe-générateur (3) à turbine à gaz, au moins un organe de réglage (14) pour régler le flux d'un fluide de travail (a) pénétrant dans la chambre de combustion (9) de la turbine (4) du groupe-générateur (3) à turbine à gaz.

12. Procédé selon l'une ou plusieurs des revendications 1 à 11, **caractérisé en ce que** l'on utilise pour le groupe-générateur (3) à turbine à gaz, au moins un organe de réglage (16) pour engendrer un courant d'excitation (g) pour l'enroulement d'excitation (13) du générateur (6) du groupe-générateur (3) à turbine à gaz.

13. Procédé selon l'une ou plusieurs des revendications 1 à 12, **caractérisé en ce que** l'on utilise pour le groupe-générateur (3) à turbine à gaz, au moins un organe de réglage (15) pour régler les aubes directrices du compresseur (5) du groupe-générateur (3) à turbine à gaz.

14. Procédé selon l'une ou plusieurs des revendications précédentes, **caractérisé en ce que** pour les fonctions de transmission (Fₖᵢ), on utilise des algorithmes régis par calculateur.

15. Procédé selon l'une ou plusieurs des revendications précédentes, **caractérisé en ce que** les algorithmes utilisent une limite de dépassement.

16. Procédé selon l'une ou plusieurs des revendications précédentes, **caractérisé en ce que** l'on utilise en tant que limite de dépassement, un algorithme de régulation anti-wind-up.

17. Dispositif de régulation pour la mise en oeuvre du procédé selon l'une ou plusieurs des revendications 1 à 16, **caractérisé en ce que** le dispositif de régulation comprend des moyens reliés à des écarts de régulation (Δn, ΔP, Δϑ, ΔU) et destinés à la représentation de fonctions de transmission (F_{N1}, F_{N2}, F_{N3}, F_{P1}, F_{P2}, F_{P3}, F_{ϑ1}, F_{ϑ2}, F_{ϑ3}, F_{U1}, F_{U2}, F_{U3}), les moyens destinés à la représentation de fonctions de transmission (F_{N1}, F_{N2}, F_{N3}, F_{P1}, F_{P2}, F_{P3}, F_{ϑ1}, F_{ϑ2}, F_{ϑ3}, F_{U1}, F_{U2}, F_{U3}) qui sont respectivement reliés au même écart de régulation (Δn, ΔP, Δϑ, ΔU) étant reliés respectivement à des points de combinaison logique (17, 18, 19) différents, qui élaborent une grandeur de réglage (h_{cons}, β_{LS}, u_{f}).

18. Dispositif de régulation selon la revendication 17, **caractérisé par** des moyens destinés à déterminer des écarts de régulation à partir de valeurs de consigne et de valeurs réelles.
